# EUROPEAN PATENT APPLICATION

(11) **EP 3 016 268 A2**
(43) Date of publication of application: **04.05.2016**
(21) Application number: 15190772.2
(22) Date of filing: 21.10.2015
(51) Int. Cl.: H02P 6/182

(54) **MOTOR DRIVE APPARATUS, VEHICLE AIR ADJUSTMENT APPARATUS, AND MOTOR-ROTATION-NUMBER DETECTION METHOD**

(30) Priority: 28.10.2014 JP 2014219359
(71) Applicant: Keihin Corporation, Shinjuku-ku, Tokyo (JP)
(72) Inventor: SUZUKI, Hiroto, Shioya-gun, Tochigi (JP); HATAKEYAMA, Yoshiyuki, Kamakura-shi, Kanagawa (JP); FUKUMOTO, Syohei, Kamakura-shi, Kanagawa (JP)
(74) Representative: Eisenführ Speiser

(57) **Abstract**

A motor drive apparatus (A) which drives a motor is provided. The motor drive apparatus includes: an instantaneous interruption generation device (4) which generates, at a time of driving the motor, an instantaneous interruption in a definite period in drive power to the motor; and a rotation-number-detection device (3) which calculates the number of rotations of the motor based on a regenerative voltage of the motor at a time of the instantaneous interruption.

## Description

### Technical Field

Embodiments of the present invention relate to motor drive apparatuses, vehicle air adjustment apparatuses, and motor-rotation-number detection methods.

### Background Art

JP 2005-006413A discloses a blower motor control unit for air conditioning that can reduce the influence of noise due to a drive current supplied to a blower motor and is simple in configuring and also easy in assembling. The blower motor control unit for air conditioning directly connects a base board to which is mounted a drive circuit which drives the blower motor to the blower motor via a motor connection terminal and integrally attaches a control board to which is mounted a control circuit onto the base board, PWM-controls the blower motor by a control signal generated by the control circuit, and causes the blower fan to be rotated to conduct ventilation.

Now, in the related art, for example, drive power is supplied to the blower motor by PWM control and a load voltage is provided which corresponds to the number of motor rotations at which an amount of ventilation required is obtained. However, an offset could arise between the actual number of rotations and the number of rotations that is estimated by the load voltage due to an individual difference from one blower motor to another, or, aging degradation, etc., of a brush especially when the blower motor is a brush motor, so that the intended ventilation amount may not be reached.

### Summary

In light of the above-described circumstances, an object of the present invention is to detect the actual number of motor rotations to correct drive power to perform an approximation to the intended number of rotations.

According to an embodiment of the invention, a motor drive apparatus (A) which drives a motor is provided, including: an instantaneous interruption generation device (4) which generates, at a time of driving the motor, an instantaneous interruption in a definite period in drive power to the motor; and a rotation-number-detection device (3) which calculates the number of rotations of the motor based on a regenerative voltage of the motor at a time of the instantaneous interruption.

In the motor drive apparatus according to an embodiment of the invention, the rotation-number-detection device calculates the number of rotations of the motor based on a mean of the regenerative voltage.

In the motor drive apparatus according to an embodiment of the invention, the motor is a brush motor; and the rotation-number-detection device calculates the number of rotations of the brush motor based on a pulse period of the regenerative voltage and the number of brushes of the brush motor.

In the motor drive apparatus according to an embodiment of the invention, the instantaneous interruption generation device generates the instantaneous interruption at a definite interval of at least one second.

In the motor drive apparatus according to an embodiment of the invention, a time of the instantaneous interruption is less than or equal to 10 milliseconds.

According to an embodiment of the invention, a vehicle air adjustment apparatus (S) is provided, including: a motor; a motor drive apparatus (A) which drives the motor, the motor drive apparatus including an instantaneous interruption generation device (4) which generates, at a time of driving the motor, an instantaneous interruption in a definite period in drive power to the motor, and a rotation-number-detection device (3) which calculates the number of rotations of the motor based on a regenerative voltage of the motor at a time of the instantaneous interruption; a fan (F) which is rotated by the motor; and a motor bracket (Bk) which fixes the motor, wherein the motor drive apparatus is mounted to the motor bracket.

In the vehicle air adjustment apparatus according to an embodiment of the invention, the rotation-number-detection device calculates the number of rotations of the motor based on a mean of the regenerative voltage.

In the vehicle air adjustment apparatus according to an embodiment of the invention, the motor is a brush motor; and the rotation-number-detection device calculates the number of rotations of the brush motor based on a pulse period of the regenerative voltage and the number of brushes of the brush motor.

In the vehicle air adjustment apparatus according to an embodiment of the invention, the instantaneous interruption generation device generates the instantaneous interruption at a definite interval of at least one second.

In the vehicle air adjustment apparatus according to an embodiment of the invention, a time of the instantaneous interruption is less than or equal to 10 milliseconds.

According to an embodiment of the invention, a method of detecting the number of motor rotations is included, including: generating, at a time of driving a motor, an instantaneous interruption in a definite period in a drive power to the motor; and calculating the number of rotations of the motor based on a regenerative voltage of the motor at a time of the instantaneous interruption.

In the method of detecting the number of motor rotations according to an embodiment of the invention, in the calculating, the number of rotations of the motor is calculated based on a mean of the regenerative voltage.

In the method of detecting the number of motor rotations according to an embodiment of the invention, the motor is a brush motor; and, in the calculating, the number of rotations of the brush motor is calculated based on a pulse period of the regenerative voltage and the number of brushes of the brush motor.

According to embodiments of the invention, a motor drive apparatus which drives a motor may be provided, including an instantaneous interruption generation device which generates an instantaneous interruption in a definite period in drive power to the motor; and a rotation-number-detection device which calculates the number of rotations of the motor based on a regenerative voltage of the motor at a time of the instantaneous interruption, correct drive power based on the actual number of rotations to perform an approximation of the motor to the intended number of rotations.

### Brief description of drawings

FIG. 1 is a functional block diagram of a motor drive apparatus according to one embodiment of the present invention;
FIG. 2A is a diagram illustrating a cross section of a vehicle air adjustment apparatus onto which the motor drive apparatus according to one embodiment of the present invention is mounted;
FIG. 2B is a diagram illustrating a bottom face of a motor bracket according to one embodiment of the present invention;
FIG. 2C is a diagram illustrating a top face of the motor bracket according to one embodiment of the present invention;
FIG. 3 is a diagram illustrating drive power, a waveform of a regenerative voltage, another waveform in which the regenerative voltage is enlarged, and a further waveform in which the regenerative voltage is further enlarged that are generated in the motor drive apparatus according to one embodiment of the present invention;
FIG. 4A is a diagram illustrating a process which calculates a mean regenerative voltage in the motor drive apparatus according to one embodiment of the present invention; and
FIG. 4B is a diagram illustrating another process which calculates a pulse period of the regenerative voltage in the motor drive apparatus according to one embodiment of the present invention.

### Description of embodiments

Below, one embodiment of the present invention is described with reference to the drawings.

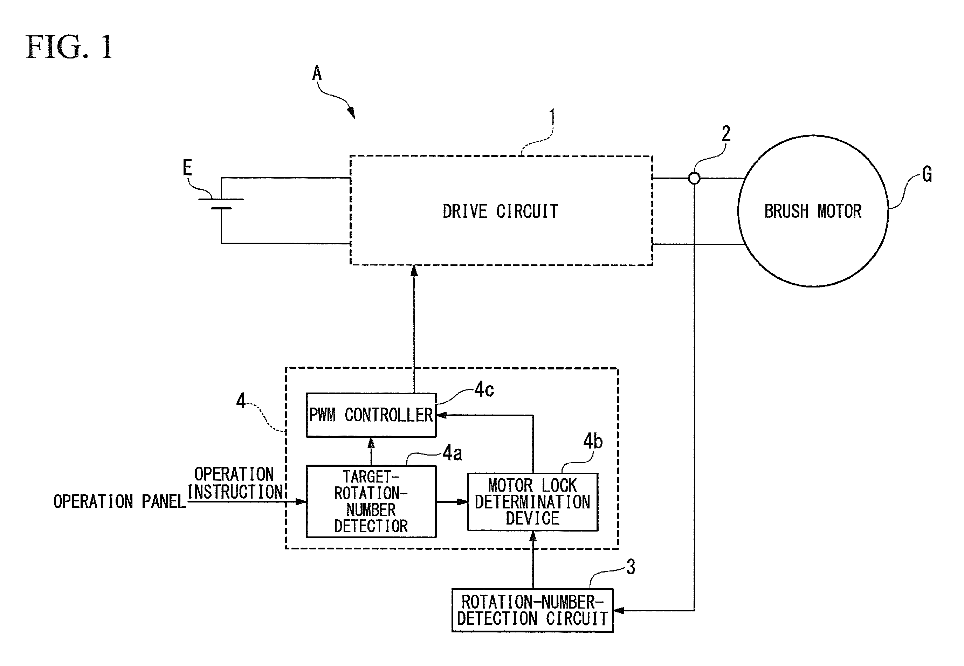

A motor drive apparatus A according to the present embodiment converts power output from a direct current power source E to supply the converted result to a brush motor G. As shown in FIG. 1, such a motor drive apparatus A includes a drive circuit 1, a voltage sensor 2, a rotation-number-detection circuit 3 (rotation-number-detection device), and a drive circuit controller 4 (an instantaneous interruption generation device).

The brush motor G is used as a rotator for rotating a fan F of a below-described vehicle air adjustment apparatus S with the fan F thereof being connected to a rotation axle. Moreover, the above-described direct current power source E is a battery in which one or multiple battery cells are connected in series, for example.

The drive circuit 1 converts direct current power supplied from the direct current power source E based on a PWM signal whish is supplied from the drive circuit controller 4 to excitation power to supply the converted result to the brush motor G.

The voltage sensor 2 detects a voltage of a power line which connects the drive circuit 1 and the brush motor G and outputs a voltage detection signal which shows the detected voltage to the rotation-number-detection circuit 3.

The rotation-number-detection circuit 3, which detects the number of rotations of the brush motor G, performs an operation process based on operation programs stored in an internal ROM with a voltage value of drive power that is shown by the voltage detection signal from the voltage sensor 2, calculates the present number of rotations of the brush motor G, and outputs the present number of rotations to the drive circuit controller 4.

The drive circuit controller 4 controls switching of the drive circuit 1 and includes a target-rotation-number detector 4a, a motor lock determination device 4b, and a PWM controller 4c as shown in FIG. 1.

The target-rotation-number detector 4a calculates the target number of rotations of the brush motor G based on operation instructions of the fan F of the vehicle air adjustment apparatus S that are shown with operation instructions from an operation panel (not shown) and outputs the calculated target number of rotations to the motor lock determination device 4b and the PWM controller 4c.

The motor lock determination device 4b compares the present number of rotations that is input from the rotation-number-detection circuit 3 and the target number of rotations that is input from the target-rotation-number detector 4a, determines that the brush motor G is in a motor lock state when the difference therebetween exceeds a predetermined threshold value, and outputs an instruction for stopping supplying of drive power to the brush motor G when it is determined that the brush motor G is in the motor lock state and outputs the present number of rotations when it is determined that the brush motor G is not in the motor lock state.

The PWM controller 4c calculates a duty value of the PWM signal in PWM control such that the present number of rotations that is input from the motor lock determination device 4b follows the target number of rotations that is input from the target-rotation-number detector 4a and generates the PWM signal for causing the drive circuit 1 to perform a switching operation based on the duty value to output the generated PWM signal to the drive circuit 1. On the other hand, when the instruction for stopping supplying is input from the motor lock determination device 4b, the PWM controller 4c stops outputting of the PWM signal to the drive circuit 1. When inputting of the PWM signal from the PWM controller 4c is stopped, the drive circuit 1 stops supplying of the drive power to the brush motor G.

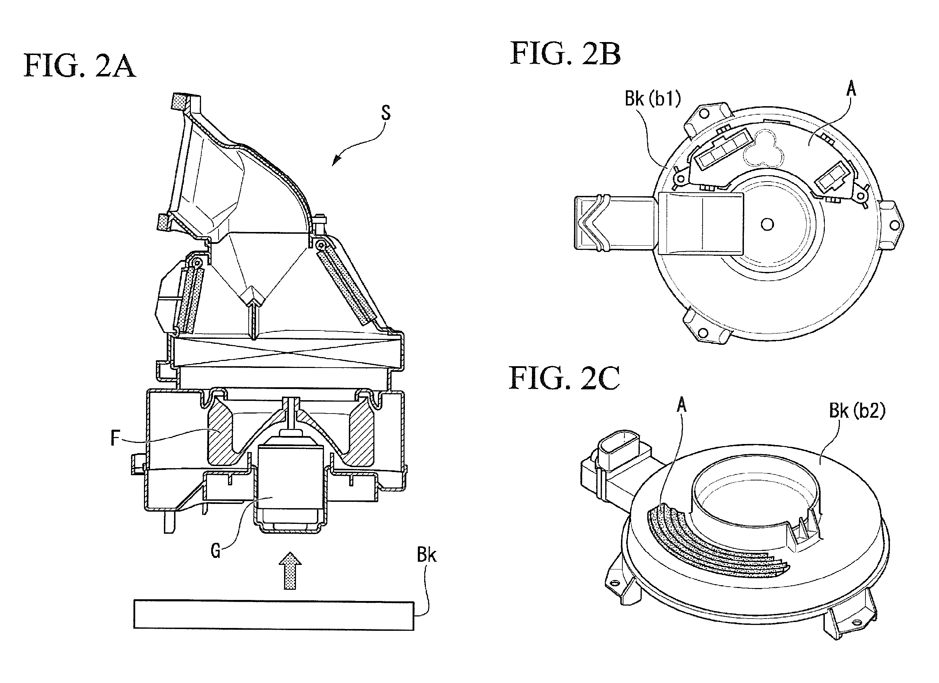

As shown in FIGS. 2A, 2B, and 2C, the motor drive apparatus A and the brush motor G in the above-described configuration are constituting elements of the vehicle air adjustment apparatus S. The vehicle air adjustment apparatus S, which is provided in a vehicle such as an automobile, etc., takes in the outer air or the inner air and conduct ventilation within the passenger space of the vehicle. In the vehicle air adjustment apparatus S, the fan F is coupled to the rotation axle of the brush motor G and rotates with driving by the brush motor G. Moreover, a motor bracket Bk accommodates the brush motor G from the lower side of the vehicle air adjustment apparatus S to fix the accommodated brush motor G.

Moreover, as shown in FIG. 2B, a motor drive apparatus A is mounted onto a surface of a lower face b1 of the motor bracket Bk. On the other hand, a wiring which is connected to the drive circuit 1, the voltage sensor 2, the rotation-number-detection circuit 3, and the drive circuit controller 4 that make up the motor drive apparatus A is mounted onto a surface of an upper face b2 of the motor bracket Bk.

Next, an operation of the motor drive apparatus A which is configured in this way is described.

The motor drive apparatus A, which converts power output by the direct current power source E to supply the converted result to the brush motor G, executes the following characteristic processes.

First, in the motor drive apparatus A, the PWM controller 4c of the drive circuit controller 4 generates the PWM signal to output the generated PWM signal to the drive circuit 1 such as to drive the brush motor G. Here, the PWM controller 4c generates the PWM signal such that instantaneous interruption occurs at constant intervals in the drive power for the brush motor G.

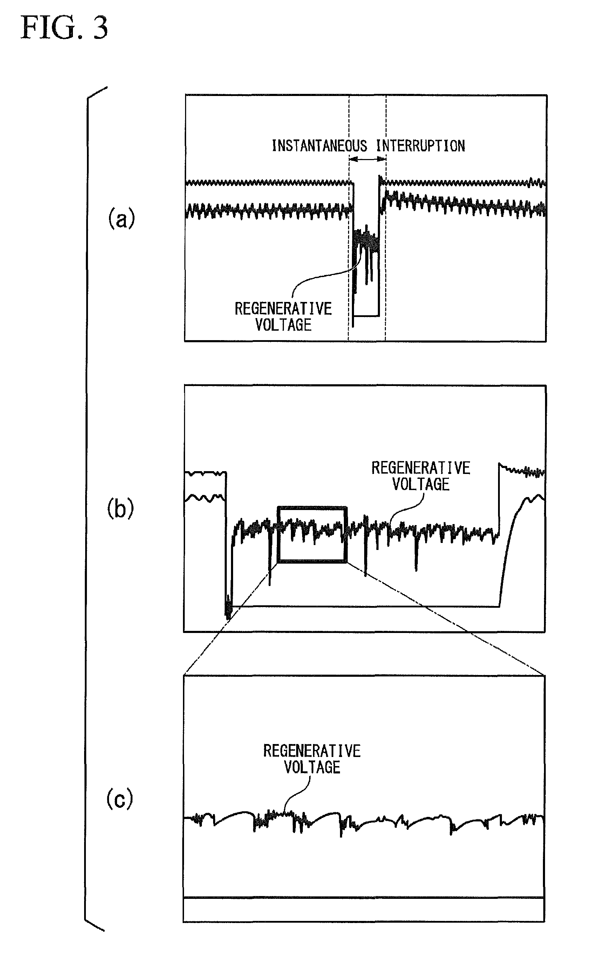

At the time of instantaneous interruption of the drive power, the voltage sensor 2 detects regenerative voltages as shown in (a), (b), and (c) in FIG. 3, for example. Normally, the drive circuit 1 generates pulse-shaped drive power to supply the generated pulse-shaped drive power to the brush motor G. When the instantaneous interruption occurs, regenerative power is produced in the brush motor G. As shown in (a), (b), and (c) in FIG. 3, voltage waveforms of this regenerative power are waveforms having ripples. The ripples are generated in correspondence with the brushes of the brush motor G.

An interval for generating an instantaneous interruption may be set to at least one second to prevent the instantaneous interruption from occurring frequently to ensure that an unpleasant feeling is not given to passengers of the vehicle onto which the vehicle air adjustment apparatus S which includes the motor drive apparatus A is mounted. Moreover, the time of instantaneous interruption is set to less than or equal to 10 milliseconds to suppress a beat sound which is produced due to large fluctuations in the number of rotations of the brush motor G.

The rotation-number-detection circuit 3 calculates a mean of the regenerative voltages at the time of this instantaneous interruption and determines the number of rotations of the brush motor G based on the mean. For example, when a voltage value shown by the voltage detection signal which is input from the voltage sensor 2 drastically decreases to below a predetermined threshold value, the rotation-number-detection circuit 3 determines that the instantaneous interruption of the drive power to the brush motor G is occurring.

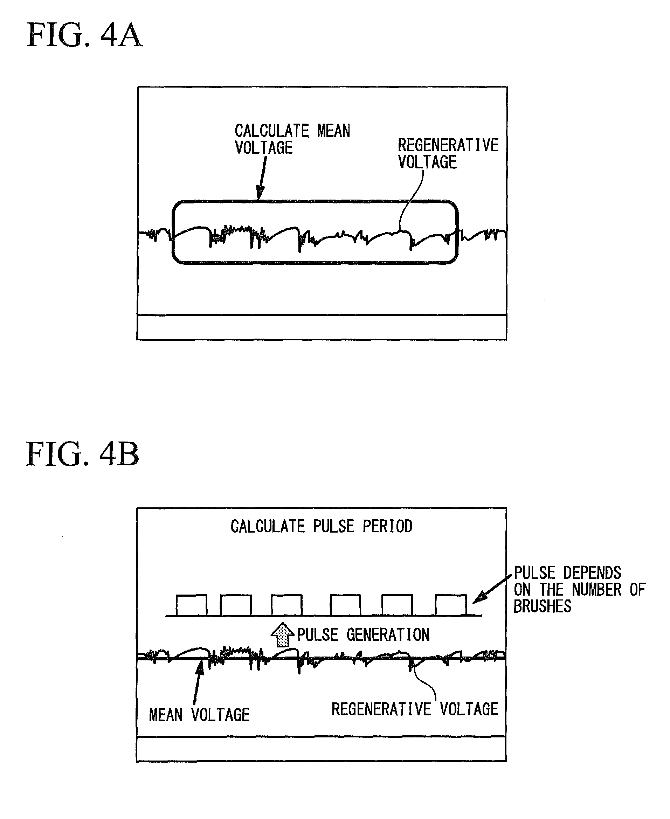

Upon determining that the instantaneous interruption of the drive power is occurring, the rotation-number-detection circuit 3 calculates the mean of voltage values shown by the voltage detection signal input from the voltage sensor 2 (see FIG. 4A). Here, as excess current is produced immediately after the start of the instantaneous interruption, the rotation-number-detection circuit 3 calculates the mean voltage value such that the voltage value immediately after the start of the instantaneous interruption is not included. In other words, the rotation-number-detection circuit 3 calculates the mean of the voltage values between a predetermined time elapsed after the voltage value indicated by the voltage detection signal drops below a predetermined threshold value and a definite time elapsed (between 2 milliseconds elapsed and 4 milliseconds elapsed when the time of pre-interruption is 10 milliseconds, for example) and calculates the number of rotations of the brush motor B based on the calculated mean voltage value.

Moreover, for calculating the number of rotations of the brush motor G from the mean, a data table is used. In other words, the rotation-number-detection circuit 3 stores in advance the data table in which is registered the number of rotations of the brush motor G in accordance with the mean voltage value and, upon calculating the mean voltage value, collates the mean voltage value with the data table to calculate the number of rotations of the brush motor G. Moreover, the rotation-number-detection circuit 3 may calculate the number of rotations of the brush motor G from the mean of multiple times of instantaneous interruptions.

For example, the rotation-number-detection circuit 3 may calculate the mean voltage value for each of three times of instantaneous interruptions, and, moreover, calculate a mean of the mean voltage values of the three times of the instantaneous interruptions and calculate the number of rotations of the brush motor G from the mean. The drive power of the brush motor G is normally a sinusoidal wave, so that the regenerative voltage at the time of instantaneous interruption differs substantially depending on the position of the instantaneous interruption on this sinusoidal wave. Therefore, a mean can further be determined from the mean of the mean voltage values of multiple times of the instantaneous interruptions to determine a mean for all of the regenerative voltages.

Then, upon calculating the number of rotations of the brush motor G, the rotation-number-detection circuit 3 outputs the calculated number of rotations to the drive circuit controller 4. Based on the number of rotations that is input from the rotation-number-detection circuit 3, the drive circuit controller 4 controls the drive circuit 1 to control the drive power to the brush motor G.

Moreover, at the time of instantaneous interruption of the drive power, the rotation-number-detection circuit 3 may determine the number of rotations of the brush motor G with a method which is different from the above-described method. For example, the rotation-number-detection circuit 3 may calculate the number of rotations of the brush motor G based on the number of brushes of the brush motor G and a pulse period of the voltage waveform which is shown by the voltage detection signal which is input from the voltage sensor 2.

More specifically, first, in the same manner as the above-described method, the rotation-number-detection circuit 3 determines that an instantaneous interruption of the drive power to the brush motor G is occurring when the voltage value shown by the voltage detection signal input from the voltage sensor 2 decreases dramatically to below a predetermined threshold value.

Next, upon determining that the instantaneous interruption of the drive power is occurring, the rotation-number-detection circuit 3 generates a pulse waveform at the time of this instantaneous interruption that has a ripple of the voltage waveform indicated with the voltage detection signal input from the voltage sensor 2 set to a high state. As a method of generating this pulse waveform, for example, the mean of the voltage value is calculated at the time of the instantaneous interruption, the mean and the voltage waveform indicated with the voltage detection signal are compared by a comparator and a waveform is generated which takes a high state when the voltage waveform is higher than the mean. The number of pulses of this pulse waveform depends on the number of brushes of the brush motor G (see FIG. 4B). The rotation-number-detection circuit 3 calculates the pulse period from the number of pulses of this pulse waveform and calculates the number of rotations based on the Equation (1) below.

Then, when the number of rotations of the brush motor G is calculated, the rotation-number-detection circuit 3 outputs the calculated number of rotations to the drive circuit controller 4. The drive circuit controller 4 controls the drive circuit 1 based on the number of rotations that is input from the rotation-number-detection circuit 3 to control the drive power to the brush motor G.

The present embodiment as described above makes it possible to generate an instantaneous interruption for a predetermined period in the drive power to the brush motor G and calculate the number of rotations of the brush motor G based on the regenerative voltage of the brush motor G at the time of instantaneous interruption to perform an approximation to the intended number of rotations that is more favorable than the related art.

While preferred embodiments of the invention have been described and illustrated above, it should be understood that the invention is not to be limited to the above-described embodiments, so that variations such as the following may be possible, for example:
(1) The present embodiment may be mounted onto an apparatus other than the vehicle air adjustment apparatus.
(2) While an interval for generating the instantaneous interruption is set to at least one second and a time of the instantaneous interruption is set to less than or equal to 10 milliseconds in the present embodiment, the interval for causing the instantaneous interruption and the time of the instantaneous interruption can be set by a user. In other words, depending on the preferences of the user, the interval for causing the instantaneous interruption may be set to be less than one second or the time of the instantaneous interruption may be set to be longer than 10 milliseconds.
(3) While the present embodiment is applied to a motor drive apparatus which supplies drive power to the brush motor G in the above-described embodiment, a technique of calculating a mean of the regenerative voltages at the time of instantaneous interruption and determining the number of rotations of the motor based on the calculated mean may be applied to a motor drive apparatus which supplies drive power to a brush-less motor, which is a motor other than the brush motor G, or a permanent magnet synchronous motor, etc.

For example, for a motor drive apparatus which supplies drive power of three phases of a U phase, a V phase, and a W phase, the voltage sensor 2 may be provided on one power line of either one of the U phase, the V phase, and the W phase and the number of rotations of the motor may be detected based on detection results which are detected by this voltage sensor 2. Moreover, the voltage sensor 2 may be provided on each power line of the U phase, the V phase, and the W phase (or two of the three power lines), the number of rotations may be calculated based on the respective regenerative voltages which occur in the respective power lines and the final number of rotations may be calculated from the number of rotations based on the regenerative voltage which occurs on the respective power lines (for example, the final number of rotations is calculated based on the mean of the number of rotations based on the regenerative voltage which occurs on the respective power lines.

## Claims

1. A motor drive apparatus (A) which drives a motor, comprising:
an instantaneous interruption generation device (4) which generates, at a time of driving the motor, an instantaneous interruption in a definite period in drive power to the motor; and
a rotation-number-detection device (3) which calculates the number of rotations of the motor based on a regenerative voltage of the motor at a time of the instantaneous interruption.

2. The motor drive apparatus as claimed in claim 1, wherein
the rotation-number-detection device calculates the number of rotations of the motor based on a mean of the regenerative voltage.

3. The motor drive apparatus as claimed in claim 1 or 2, wherein
the motor is a brush motor (G); and
the rotation-number-detection device calculates the number of rotations of the brush motor based on a pulse period of the regenerative voltage and the number of brushes of the brush motor.

4. The motor drive apparatus as claimed in any one of claims 1 to 3, wherein
the instantaneous interruption generation device generates the instantaneous interruption at a definite interval of at least one second.

5. The motor drive apparatus as claimed in any one of claims 1 to 4, wherein
a time of the instantaneous interruption is less than or equal to 10 milliseconds.

6. A vehicle air adjustment apparatus (S), comprising:
a motor;
a motor drive apparatus (A) which drives the motor, the motor drive apparatus including an instantaneous interruption generation device (4) which generates, at a time of driving the motor, an instantaneous interruption in a definite period in drive power to the motor, and a rotation-number-detection device (3) which calculates the number of rotations of the motor based on a regenerative voltage of the motor at a time of the instantaneous interruption;
a fan (F) which is rotated by the motor; and
a motor bracket (Bk) which fixes the motor, wherein
the motor drive apparatus is mounted to the motor bracket.

7. The vehicle air adjustment apparatus as claimed in claim 6, wherein
the rotation-number-detection device calculates the number of rotations of the motor based on a mean of the regenerative voltage.

8. The vehicle air adjustment apparatus as claimed in claim 6 or 7, wherein
the motor is a brush motor (G); and
the rotation-number-detection device calculates the number of rotations of the brush motor based on a pulse period of the regenerative voltage and the number of brushes of the brush motor.

9. The vehicle air adjustment apparatus as claimed in any one of claims 6 to 8, wherein
the instantaneous interruption generation device generates the instantaneous interruption at a definite interval of at least one second.

10. The vehicle air adjustment apparatus as claimed in any one of claims 6 to 9, wherein
a time of the instantaneous interruption is less than or equal to 10 milliseconds.

11. A method of detecting the number of motor rotations, comprising:
generating, at a time of driving a motor, an instantaneous interruption in a definite period in a drive power to the motor; and
calculating the number of rotations of the motor based on a regenerative voltage of the motor at a time of the instantaneous interruption.

12. The method of detecting the number of motor rotations as claimed in claim 11, wherein, in the calculating, the number of rotations of the motor is calculated based on a mean of the regenerative voltage.

13. The method of detecting the number of motor rotations as claimed in claim 11, wherein the motor is a brush motor (G); and, in the calculating, the number of rotations of the brush motor is calculated based on a pulse period of the regenerative voltage and the number of brushes of the brush motor.
